# EUROPÄISCHE PATENTSCHRIFT

(11) **EP 3 022 811 B1**
(45) Veröffentlichungstag und Bekanntmachung des Hinweises auf die Patenterteilung: **29.11.2017**
(21) Anmeldenummer: 14742191.1
(22) Anmeldetag: 17.07.2014
(51) Int. Cl.: H02G 3/22

(54) **LEITUNGSDURCHFÜHRUNG, VERFAHREN ZUR HERSTELLUNG EINER LEITUNGSDURCHFÜHRUNG UND VERFAHREN ZUR MONTAGE EINER LEITUNGSDURCHFÜHRUNG**
CABLE BUSHING, METHOD FOR PRODUCING A CABLE BUSHING, AND METHOD FOR FITTING A CABLE BUSHING
TRAVERSÉE DE CÂBLE, PROCÉDÉ DE FABRICATION D'UNE TRAVERSÉE DE CÂBLE ET PROCÉDÉ DE MONTAGE D'UNE TRAVERSÉE DE CÂBLE

(30) Priorität: 17.07.2013 EP 13176837
(43) Veröffentlichungstag der Anmeldung: 25.05.2016
(73) Patentinhaber: Hilti Aktiengesellschaft, 9494 Schaan (LI)
(72) Erfinder: MÜNZENBERGER, Herbert, 65191 Wiesbaden (DE); KLEIN, Manfred, 86916 Kaufering (DE)
(86) Internationale Anmeldenummer: PCT/EP2014/065343
(87) Internationale Veröffentlichungsnummer: WO 2015/007824

(56) Entgegenhaltungen:
- EP-A2- 1 101 992
- EP-A2- 2 493 041
- EP-A2- 2 570 157
- WO-A1-81/02814
- WO-A1-03/089828
- DE-U1-202012 003 405

## Beschreibung

Die Erfindung betrifft eine Leitungsdurchführung, ein Verfahren zur Herstellung einer Leitungsdurchführung sowie ein Verfahren zur Montage einer Leitungsdurchführung. Leitungsdurchführungen mit intumeszierendem Material werden zum Brandschutz bei durch Bauteile wie Wände oder Decken geführten Kabeln und Rohren eingesetzt. Derartige Leitungsdurchführungen können nachträglich in eine Öffnung des Bauteils eingesetzt werden. Wird das Bauteil jedoch aus Beton gegossen, ist es günstig, die Leitungsdurchführungen gleich mit zu vergießen, das heißt der flüssige Beton umschließt die Leitungsdurchführung.

Aufgabe der Erfindung ist es, eine einfach aufgebaute und kostengünstig zu fertigende Leitungsdurchführung zu schaffen, die einen sicheren Brandschutz bietet und die in einem Bauteil als Cast-In-Teil vergossen werden kann.

Hierzu weist erfindungsgemäß eine Leitungsdurchführung einen Formkörper auf, der im Wesentlichen aus einem intumeszierenden Schaummaterial besteht und der wenigstens eine Durchführöffnung für eine Leitung aufweist, wobei eine Außenkontur des Formkörpers radial nach außen gerichtete Vorsprünge zur Verankerung in einem gegossenen Bauteil aufweist. Die Vorsprünge an der Außenkontur bilden beim Eingießen Hinterschnitte im Beton, die die Leitungsdurchführung sicher im Bauteil verankern. Die Vorsprünge können einfach bei der Herstellung des Formkörpers, insbesondere durch Schäumen in einer Form, mitgefertigt werden.

Das intumeszierenden Schaummaterial umfasst bevorzugt ein schäumbares Bindemittel, das ein intumeszierendes Stoffgemisch enthält. Das Bindemittel dient dabei als verbundbildender Träger für das intumeszierende Stoffgemisch. Bevorzugt ist das Stoffgemisch homogen in dem Bindemittel verteilt. Der verbundbildenden Träger ist bevorzugt aus der Gruppe ausgewählt, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon, wobei Polyurethane bevorzugt sind.

Das intumeszierende Stoffgemisch umfasst die üblichen und dem Fachmann bekannten Brandschutzadditive, welche im Brandfall, also unter Hitzeeinwirkung aufschäumen und dabei einen die Flammenausbreitung hindernden Schaum ausbilden, wie ein intumeszierendes Material auf der Grundlage eines Säurebildners, einer Kohlenstoff liefernden Verbindung und eines Gasbildners. Bevorzugt umfasst das intumeszierende Material als Säurebildner, ein Salz oder ein Ester einer anorganischen, nichtflüchtigen Säure ausgewählt aus Schwefelsäure, Phosphorsäure und Borsäure, als Kohlenstoff liefernde Verbindung eine Polyhydroxyverbindung und/oder ein thermoplastisches oder duroplastisches polymeres Harzbindemittel und als Gasbildner ein Chlorparaffin, Melamin, eine Melaminverbindung, insbesondere Melamincyanurat, Melaminphosphat, Melaminpolyphosphat, Tris(hydroxyethyl)-cyanurat, Cyanamid, Dicyanamid, Dicyandiamid, Biguanidin und/oder ein Guanidinsalz, insbesondere Guanidinphosphat oder Guanidinsulfat.

Der verbundbildende Träger kann ferner als ablatives Additiv, eine anorganische Verbindung, die Wasser, z.B. als Kristallwasser, fest eingelagert hat und bei Temperaturen bis 100°C nicht austrocknet, dieses aber im Brandfall ab 120°C freisetzt und dadurch temperaturführende Teile kühlen kann, enthalten, bevorzugt ein bei der Brandtemperatur bzw. bei Beflammung wasserabgebendes anorganisches Hydroxid oder Hydrat, insbesondere Aluminiumhydroxid, Aluminiumoxidhydrate oder teilhydratisierte Aluminiumhydroxide. Es kommen aber auch andere, bei der Beflammung wasserabgebende anorganische Hydroxide oder Hydrate in Betracht, wie sie in der EP 0 274 068 A2 beschrieben sind.

Derartige Verbindungen, die als Stoffgemisch in der erfindungsgemäßen BrandschutzEinlage eingesetzt werden können, sind dem Fachmann bekannt und beispielsweise in den folgenden Druckschriften offenbart, auf die hiermit ausdrücklich Bezug genommen sei: DE 30 25 309 A1, DE 30 41 731 A1, DE 33 02 416 A1, DE 34 11 327 A1, EP 0 043 952 B1, EP 0 051 106 B1, EP 0 061 024 B1, EP 0 116 846 B1, EP 0 158 165 B1, EP 0 274 068 A2, EP 1 347 549 A1, EP 1 641 895 B1 und DE 196 53 503 A1.

Die Herstellung der Brandschutzeinlage ist beispielsweise durch Formschäumen, wie Reaktionsschäumen (RIM), entsprechend der DE 3917518, z.B. mit Fomox®-Brandschutzschaum oder dem dämmschichtbildenden Baustoff HILTI CP 65GN, möglich. Materialien, die für erfindungsgemäße Zwecke eingesetzt werden können, sind aus EP 0061024 A1, EP 0051106 A1, EP 0043952 A1, EP 0158165 A1, EP 0116846 A1 und US 3,396,129 A sowie EP 1347549 A1 bekannt. Bevorzugt besteht der Formkörper aus einem intumeszenzfähigen Polyurethanschaum, wie er aus der EP 0061024 A1, DE 3025309 A1, DE 3041731 A1, DE 3302416 A und DE 3411 327 A1 bekannt ist.

Um die Stabilität der aufgeschäumten Brandschutzeinlage zu verbessern, können aber auch Glasfasern in die Brandschutzeinlage eingearbeitet sein, durch die eine wesentlich höhere Stabilität des aufgeschäumten Materials erzielt werden kann. Die Brandschutzeinlage kann beispielsweise einen Kern aus Glasfasern, insbesondere aus einem Glasfasergewebe aufweisen. Dies verbessert zudem die Stabilität bei der Verarbeitung der Brandschutzeinlage, sodass ein einfacheres Verlegen der Brandschutzeinlage, insbesondere ein einfacheres Falten oder Schwenken der Seitenelemente, möglich ist.

Das Bauteil ist beispielsweise eine Wand oder eine Decke aus Beton. Bei der Leitung kann es sich insbesondere um elektrische Leitungen oder Rohre handeln.

Der Formkörper ist als Grundform vorzugsweise quaderförmig oder kreiszylindrisch ausgebildet.

Es ist möglich, den Formkörper teilweise in einen Rahmen zu integrieren oder mit einem Flansch zu montieren, beispielsweise um das Vergießen im Bauteil zu erleichtern. Die Vorsprünge kommen dabei aber immer mit dem Material des Bauteils in Kontakt, sodass der Formkörper sicher im Bauteil verankert wird.

Vorzugsweise sind mehrere in Axialrichtung hintereinander angeordnete Vorsprünge vorgesehen, um die Fixierung des Formkörpers im Bauteil zu verbessern.

Wenigstens einer der Vorsprünge kann umfangsmäßig umlaufend ausgebildet sein. Es ist aber auch möglich, die Vorsprünge über den Umfang des Formkörpers unterbrochen auszubilden.

In einer vorteilhaften Ausführungsform der Erfindung ist die mindestens eine Durchführöffnung anfänglich von einer Membran verschlossen. Die Membran kann in den Formkörper eingebettet sein, was vorzugsweise bereits bei der Herstellung des Formkörpers geschieht. Es ist günstig, wenn die Membran ein intumeszierendes Material enthält. Beim Einführen der Leitungen wird die Membran durchstoßen, ist aber vorzugsweise so ausgebildet, dass sie an den Leitungen anliegt. Sowohl in den noch verschlossenen Durchführöffnungen als auch in den mit Leitungen gefüllten Durchführöffnungen kann so im Brandfall ein rauchgasdichter Verschluss erzeugt werden.

Der Außenumfang des Formkörpers ist bevorzugt mit einer wasserdichten Haut umgeben, sodass ein Eindringen von Zementschlemme und Feuchtigkeit aus dem Beton beim Gießen verhindert werden kann. Die wasserdichte Haut kann beispielsweise eine Folie sein, aber auch eine Beschichtung, vorzugsweise aus Latex.

Die Vorsprünge enthalten ausreichend intumeszierendes Material, um alle Durchführöffnungen im Wesentlichen zu verschließen.

Ein Vorsprung wird hier als der Teil des Formkörpers betrachtet, der radial in das Bauteil hineinragt, in das der Formkörper eingebettet ist.

Der Maximalquerschnitt der Leitungsdurchführung ist durch eine zylindrische Wand des gegossenen Bauteils rings um den Formkörper definiert, die die Innenwand der Öffnung im Bauteil bildet, die vom Formkörper ausgefüllt wird. Dieses Maß ist identisch mit der Abmessung einer zylindrischen Außenwand des Formkörpers, von der die Vorsprünge abstehen, wobei die Querschnittsfläche der Querschnittsfläche des Formkörpers mit Ausnahme der Vorsprünge entspricht.

Vorzugsweise sind die Vorsprünge so ausgebildet, dass sie genügend intumeszierendes Material enthalten, um im Brandfall den Maximalquerschnitt der Leitungsdurchführung auszufüllen. Es ist also möglich, das gesamte Material des Formkörpers mit Ausnahme der Vorsprünge, die im Bauteil verbleiben, zu entfernen und den Maximalquerschnitt der Leitungsdurchführung vollständig für Leitungen auszunutzen.

Zur Montage der Leitungsdurchführung im Bauteil ist eine Leitungsdurchführungsbaueinheit vorgesehen, die eine oben beschriebene Leitungsdurchführung aufweist, sowie eine axial mit der Leitungsdurchführung zusammensteckbare, die Durchführöffnungen abdichtende Montageplatte. Die Montageplatte ist vorzugsweise ein Passstück. Sie greift bevorzugt in sämtliche Durchführöffnungen des Formkörpers ein und verschließt diese so dicht, dass kein Beton in die Durchführöffnungen eindringen kann.

Die Montageplatte ist beispielsweise ein Formteil aus Styropor oder Polypropylen-Partikelschaum. Sie könnte aber auch ein Tiefziehteil aus Polypropylen oder ABS sein. Die Montageplatte lässt sich somit einfach beispielsweise auf eine Schalung nageln, um die Leitungsdurchführungsbaueinheit vor dem Eingießen zu fixieren.

Eine oben genannte Leitungsdurchführung lässt sich mit den folgenden Schritten herstellen:
- Auftragen eines flüssigen Beschichtungsmaterials auf eine Oberfläche einer Schäumform, und
- anschließendes Einbringen einer Schaummasse, die einen vorbestimmten Anteil an intumeszierendem Material enthält, in die Schäumform,
wobei nach dem Schäumen das Beschichtungsmaterial eine wasserundurchlässige Haut auf dem geschämten Formkörper bildet.

Auf diese Weise ist die wasserundurchlässige Haut direkt bei der Herstellung des Formkörpers zusammen mit diesem herstellbar, sodass keine nachfolgenden Arbeitsschritte erforderlich sind.

Als Beschichtungsmaterial wird vorzugsweise ein Latexmaterial verwendet. Die Schaummasse mit dem intumeszierenden Anteil verbindet sich in diesem Fall mit dem Latexmaterial, sodass ein Schaumformkörper entsteht, der eine untrennbar mit seiner Außenkontur verbundene wasserdichte Haut aus Latex aufweist.

Das Schäumen erfolgt, wie bereits oben erwähnt, vorzugsweise in einem Reaction-Injection-Molding-Verfahren.

Eine Leitungsdurchführung, wie sie oben beschrieben ist, wird so in einem Bauteil montiert, insbesondere in einer Wand oder einer Decke aus Beton, dass beim Gießen des Bauteils der Formkörper der Leitungsdurchführung so vergossen wird, dass die Vorsprünge Hinterschnitte im Bauteil bilden. Auf diese Weise wird allein durch die Außenkontur des Formkörpers eine sichere Fixierung der Leitungsdurchführung im Bauteil erreicht.

Bei der Montage wird insbesondere eine Montageplatte der oben beschriebenen Leitungsdurchführungsbaueinheit auf einer Schalung befestigt, wobei die Montageplatte Vorsprünge aufweist, die an die Durchführöffnungen der Leitungsdurchführung angepasst sind. Der Formkörper der Leitungsdurchführung wird auf die Vorsprünge der Montageplatte aufgesetzt und fixiert, beispielsweise durch die Klemmung der Durchführöffnungen auf den Vorsprüngen der Montageplatten. Der Formkörper wird im Bauteil vergossen, und die Schalung und die Montageplatte werden entfernt.

Die Montageplatte ist vorzugsweise fest an der Schalung befestigt, beispielsweise festgenagelt, sodass mit Entfernen der Schalung gleichzeitig die Montageplatte von der Leitungsdurchführung entfernt wird.

Das Formteil kann an seinem nicht auf die Montageplatte aufgesteckten Ende mit einer Abdeckung, beispielsweise einem Deckel oder einer Folie, verschlossen werden, um ein Eindringen von Feuchtigkeit und Beton zu verhindern.

Die Erfindung wird nachfolgend anhand eines Ausführungsbeispiels mit Bezug auf die beigefügten Zeichnungen näher beschrieben. In den Zeichnungen zeigen:
- Figur 1: eine schematische Draufsicht auf eine Stirnseite einer erfindungsgemäßen Leitungsdurchführung;
- Figur 2: eine schematische Schnittansicht durch eine erfindungsgemäße Leitungsdurchführungsbaueinheit mit einer erfindungsgemäßen Leitungsdurchführung;
- Figuren 3 und 4: Arbeitsschritte zur Montage einer erfindungsgemäßen Leitungsdurchführung in einem Bauteil; und
- Figuren 5 und 6: das Einziehen von Leitungen in eine erfindungsgemäße, in ein Bauteil eingegossene Leitungsdurchführung.

Bei mehrfach in einer Figur vorkommenden Komponenten sind aus Gründen der Übersichtlichkeit jeweils nur einige wenige mit Bezugszeichen versehen.

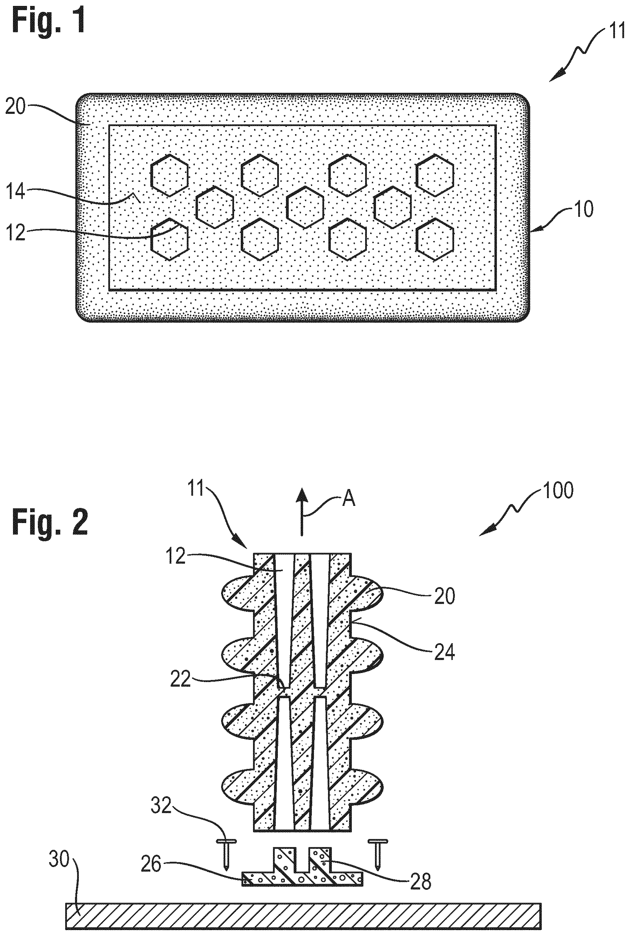

Figur 1 zeigt einen Formkörper 10 einer erfindungsgemäßen Leitungsdurchführung 11, der im Wesentlichen aus einem intumeszierenden Schaummaterial besteht. Der Formkörper 10 hat mehrere, hier einen sechseckigen Querschnitt aufweisende Durchführöffnungen 12, die sich von einer Stirnseite 14 des Formkörpers 10 zu dessen anderen, gegenüberliegenden Stirnseite erstrecken. Bei der hier gezeigten Ausführungsform sind die Durchführöffnungen 12 in einem Wabenmuster angeordnet.

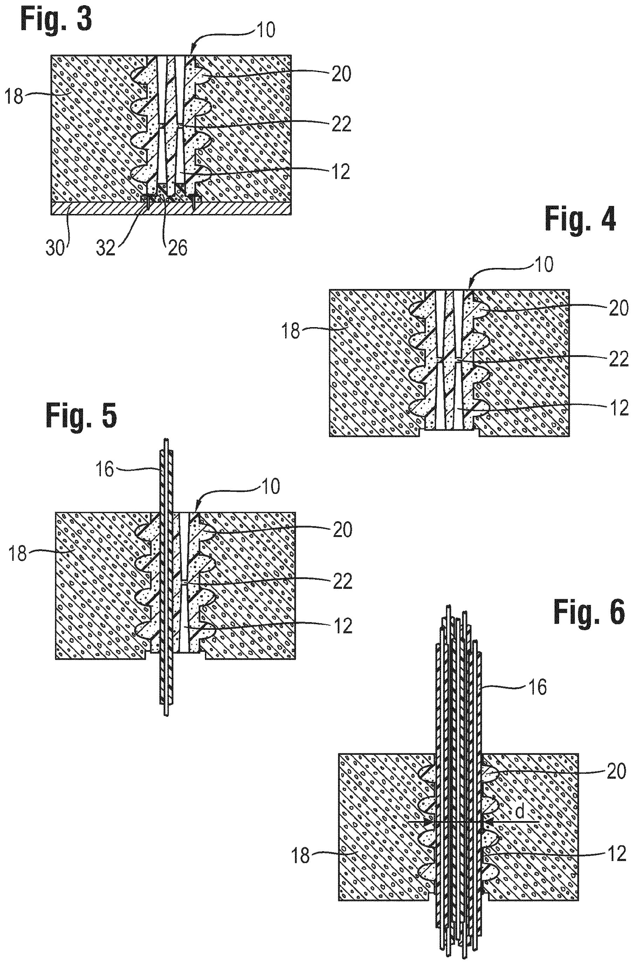

Die Leitungsdurchführung 11 ist zum Durchführen von Leitungen wie Kabeln oder Rohren durch ein aus Beton gegossenes Bauteil 18 (siehe Figuren 3 bis 6) bestimmt.

Der hier dargestellte Formkörper 10 hat eine im Wesentlichen quaderförmige Außenkontur, von der mehrere, in diesem Beispiel umfangsmäßig umlaufende Vorsprünge 20 radial nach außen abstehen. Die Vorsprünge 20 sind einstückig mit dem restlichen Formkörper 10 ausgebildet.

Im gezeigten Beispiel sind insgesamt vier, umfangsmäßig um den Formkörper 10 umlaufende, in Axialrichtung A des Formkörpers 10 hintereinander angeordnete Vorsprünge 20 am Formkörper 10 ausgebildet.

Etwa in der axialen Mitte des Formkörpers 10 ist eine Membran 22 aus oder mit einem intumeszierenden Material eingeformt, die zunächst sämtliche der Durchführöffnungen 12 verschließt.

Die Außenkontur des Formkörpers 10 ist von einer nicht näher dargestellten, wasserdichten Haut 24 umschlossen.

In diesem Beispiel wird die Haut 24 bei der Fertigung des Formkörpers 10 mit hergestellt.

Zur Herstellung der Leitungsdurchführung 11 und insbesondere des Formkörpers 10 wird eine (nicht gezeigte) Schäumform zunächst auf ihrer Innenoberfläche mit einer flüssigen Latexmasse versehen. Anschließend wird eine Schaummasse, beispielsweise aus Polyurethan, die einen vorbestimmten Anteil an intumeszierendem Material enthält, in die Schäumform eingebracht und aufgeschäumt. Die Schaummasse dient als Träger für das darin verteilte intumeszierende Material. Das intumeszierende Material wird durch den Schäumprozess nicht aktiviert, sondern bläht sich erst in einem etwaigen Brandfall auf.

Beim Aufschäumen verbindet sich das Schaummaterial mit der Latexhaut, sodass eine feste, untrennbare Verbindung zwischen der Haut 24 und dem ausgehärteten Schaum entsteht. Der fertige Formkörper 10 kann dann aus der Schäumform entnommen werden.

In diesem Arbeitsschritt wird auch gleichzeitig die Membran 22 in den Formkörper 10 eingebettet oder an diesen angeformt.

Figur 2 zeigt eine Leitungsdurchführungsbaugruppe 100, die neben einer Leitungsdurchführung 11 eine Montageplatte 26 aufweist, die eine der Anzahl der Durchführöffnungen 12 entsprechende Anzahl von Vorsprüngen 28 aufweist, die in ihrem Querschnitt so geformt sind, dass sie möglichst dicht in die Durchführöffnungen 12 eingreifen können.

Die Montageplatte 26 ist beispielsweise ein Formteil aus Styropor, Polypropylen oder einem anderen geeigneten Material. Es kann sich dabei auch um ein Tiefziehteil aus Polypropylen oder ABS handeln.

Zur Montage der Leitungsdurchführung 11 in einem zu gießenden Bauteil 18, beispielsweise einer Wand oder Decke aus Beton, wird die Montageplatte 26 auf einem Schalungsteil 30 befestigt, hier über Nägel 32.

Der Formkörper 10 wird mit den Durchführöffnungen 12 auf die Vorsprünge 28 der Montageplatte 26 aufgesteckt.

Es ist möglich, das in Figur 2 freie obere Ende des Formkörpers 10 mit einem Deckel oder einer Folie zu verschließen (nicht dargestellt).

Beim Gießen des Bauteils 18 werden die Vorsprünge 20 des Formkörpers 10 vom Beton umschlossen und bilden Hinterschnitte im Bauteil 18 (siehe Figur 3), die den Formkörper 10 im Bauteil 18 fixieren.

Im nächsten Schritt wird das Schalungsteil 30 zusammen mit der Montageplatte 26 entfernt (siehe Figur 4).

Figur 5 zeigt das Einschieben einer einzelnen Leitung 16 in eine der Durchführöffnungen 12. Beim Einschieben der Leitung 16 wird die Membran 22 in dieser einen Durchführöffnung 12 durchstoßen. In den nicht besetzten Durchführöffnungen 12 bleibt die Membran 22 unversehrt.

Figur 6 zeigt den Fall, in dem maximal viele Leitungen 16 durch das Bauteil 18 hindurchgeführt werden sollen. Um den benötigten Platz zu schaffen, wird der Formkörper 10 soweit entfernt, dass im Wesentlichen nur noch die in das Bauteil 18 eingebetteten Vorsprünge 20 zurückbleiben. Der Maximalquerschnitt der Leitungsdurchführung, also der gesamte Querschnitt der Öffnung im Bauteil 18 (Durchmesser d in Figur 6), kann jetzt mit Leitungen 16 gefüllt werden.

Das Gesamtvolumen aller Vorsprünge 20 und die Menge des intumeszierenden Materials in diesem Volumen ist so gewählt, dass bei einer Hitzeeinwirkung ausreichend viel intumeszierendes Material vorhanden ist, um den gesamten Querschnitt der Öffnung im Bauteil 18 auszufüllen.

Gegebenenfalls müssen jedoch eventuell vorhandene Kabelzwickel separat abgedichtet werden, um optimale Rauchgasdichtigkeit zu erreichen.

## Patentansprüche

1. Leitungsdurchführung mit einem Formkörper (10), der im Wesentlichen aus einem intumeszierenden Schaummaterial besteht und der wenigstens eine Durchführöffnung (12) für eine Leitung aufweist, wobei eine Außenkontur des Formkörpers (10) radial nach außen gerichtete Vorsprünge (20) zur Verankerung in einem gegossenen Bauteil (18) aufweist **dadurch gekennzeichnet, dass** die Vorsprünge (20) ausreichend intumeszierendes Material enthalten, um im Brandfall alle Durchführöffnungen (12) zu verschließen.

2. Leitungsdurchführung nach Anspruch 1, **dadurch gekennzeichnet, dass** mehrere in Axialrichtung (A) hintereinander angeordnete Vorsprünge (20) vorgesehen sind.

3. Leitungsdurchführung nach einem der vorhergehenden Ansprüche, **dadurch gekennzeichnet, dass** wenigstens ein Vorsprung (20) umfangsmäßig umlaufend ausgebildet ist.

4. Leitungsdurchführung nach einem der vorhergehenden Ansprüche, **dadurch gekennzeichnet, dass** die wenigstens eine Durchführöffnung (12) anfänglich von einer Membran (22) verschlossen ist.

5. Leitungsdurchführung nach einem der vorhergehenden Ansprüche, **dadurch gekennzeichnet, dass** der Außenumfang des Formkörpers (10) mit einer wasserdichten Haut (24) umgeben ist.

6. Leitungsdurchführung nach einem der vorhergehenden Ansprüche, **dadurch gekennzeichnet, dass** die Vorsprünge (20) so ausgebildet sind, dass sie genügend intumeszierendes Material enthalten, um im Brandfall einen Hohlraum mit einer Querschnittsfläche, die der Querschnittsfläche des Formkörpers (10) mit Ausnahme der Vorsprünge (20) entspricht, auszufüllen.

7. Leitungsdurchführungsbaueinheit mit einer Leitungsdurchführung nach einem der vorhergehenden Ansprüche und einer axial mit der Leitungsdurchführung (11) zusammensteckbaren, die Durchführöffnungen (12) abdichtenden Montageplatte (26).

8. Verfahren zur Herstellung einer Leitungsdurchführung nach einem der vorhergehenden Ansprüche, mit den Schritten:
- Auftragen eines flüssigen Beschichtungsmaterials auf eine Oberfläche einer Schäumform, und
- anschließendes Einbringen einer Schaummasse, die einen vorbestimmten Anteil an intumeszierendem Material enthält, in die Schäumform,
wobei nach dem Schäumen das Beschichtungsmaterial eine wasserundurchlässige Haut (24) auf dem geschäumten Formkörper (10) bildet.

9. Verfahren zur Montage einer Leitungsdurchführung nach einem der Ansprüche 1 bis 6 in einem Bauteil, insbesondere einer Wand oder Decke aus Beton, wobei beim Gießen des Bauteils (18) der Formkörper (10) der Leitungsdurchführung (11) so eingegossen wird, dass die Vorsprünge (20) Hinterschnitte im Bauteil (18) bilden.

10. Verfahren nach Anspruch 9, mit den Schritten:
- Befestigen einer Montageplatte (26) auf einem Schalungsteil (30), wobei die Montageplatte (26) Vorsprünge (28) aufweist, die an die Durchführöffnungen (12) der Leitungsdurchführung (11) angepasst sind,
- Aufsetzen des Formkörpers (10) der Leitungsdurchführung (11) auf die Vorsprünge (28) der Montageplatte (26) und Fixieren des Formkörpers (10),
- Vergießen des Formkörpers (10) im Bauteil (18), und
- Entfernen des Schalungsteils (30) und der Montageplatte (26).

## Claims

1. Line lead-through comprising a moulded part (10) consisting essentially of an intumescent foam material and having at least one lead-through opening (12) for a line, wherein an outer contour of the moulded part (10) has radially outwardly directed projections (20) for anchoring in a cast structural component (18), **characterised in that** the projections (20) contain sufficient intumescent material to seal all of the lead-through openings (12) in the event of a fire.

2. Line lead-through according to claim 1, **characterised by** a plurality of projections (20) arranged one behind the other in the axial direction (A).

3. Line lead-through according to one of the preceding claims, **characterised in that** at least one projection (20) is designed to extend continuously around the circumference.

4. Line lead-through according to one of the preceding claims, **characterised in that** the at least one lead-through opening (12) is initially sealed by a membrane (22).

5. Line lead-through according to one of the preceding claims, **characterised in that** the outer circumference of the moulded part (10) is surrounded by a waterproof skin (24).

6. Line lead-through according to one of the preceding claims, **characterised in that** the projections (20) are designed in such a manner that they contain sufficient intumescent material to fill a cavity having a cross-sectional area corresponding to the cross-sectional areal of the moulded part (10) except for the projections (20) in the event of a fire.

7. Line lead-through assembly comprising a line lead-through according to one of the preceding claims and a mounting plate (26) that can be fitted axially to the line lead-through (11), thereby sealing off the lead-through openings (12).

8. Method of producing a line lead-through according to one of the preceding claims, comprising the steps of:
- applying a liquid coating material to a surface of a foaming mould and
- subsequently introducing a foam composition containing a predetermined proportion of intumescent material into the foaming mould,
wherein a water-impermeable skin (24) forms on the foamed moulded part (10) after the foaming of the coating material.

9. Method of mounting a line lead-through according to one of claims 1 to 6 in a structural component, in particular a wall or ceiling made of concrete, wherein the moulded part (10) of the line lead-through (11) is cast-in in such a manner during the casting of the structural component (18) that the projections (20) form undercuts in the structural component (18).

10. Method according to claim 9, comprising the steps of:
- fastening a mounting plate (26) to a formwork part (30), wherein the mounting plate (26) has projections (28) adapted to the lead-through openings (12) of the line lead-through (11),
- placing the moulded part (10) of the line lead-through (11) on the projections (28) of the mounting plate (26) and fixing the moulded part (10),
- casting the moulded part (10) into the structural component (18), and
- removing the formwork part (30) and the mounting plate (26).

## Revendications

1. Passage de conduite comportant un corps moulé (10) principalement constitué d'une mousse intumescente et comportant au moins une ouverture de passage (12) pour une conduite, dans lequel un contour extérieur du corps moulé (10) comporte des saillies (20) dirigées radialement vers l'extérieur pour un ancrage dans un élément de construction coulé (18), **caractérisé en ce que** les saillies (20) contiennent suffisamment de matière intumescente pour obturer toutes les ouvertures de passage (12) en cas d'incendie.

2. Passage de conduite selon la revendication 1, **caractérisé en ce que** sont prévues plusieurs saillies (20) agencées les unes derrière les autres dans une direction axiale (A).

3. Passage de conduite selon l'une des revendications précédentes, **caractérisé en ce qu'**au moins une saillie (20) est formée de manière continue sur la circonférence.

4. Passage de conduite selon l'une des revendications précédentes, **caractérisé en ce que** la au moins une ouverture de passage (12) est initialement fermée par une membrane (22).

5. Passage de conduite selon l'une des revendications précédentes, **caractérisé en ce que** la circonférence extérieure du corps moulé (10) est entourée d'une peau étanche à l'eau (24).

6. Passage de conduite selon l'une des revendications précédentes, **caractérisé en ce que** les saillies (20) sont formées de sorte qu'elles contiennent suffisamment de matière intumescente pour remplir, en cas d'incendie, une cavité dont l'aire de section transversale correspond à l'aire de section transversale du corps moulé (10) à l'exclusion des saillies (20).

7. Sous-ensemble de passage de conduite comportant un passage de conduite selon l'une des revendications précédentes et une plaque de montage (26) qui étanchéifie les ouvertures de passage (12) et pouvant être assemblée avec le passage de conduite (11).

8. Procédé pour fabriquer un passage de conduite selon l'une des revendications précédentes, comportant les étapes consistant à :
- appliquer une matière de revêtement liquide sur une surface d'un moule de moussage, et
- introduire ensuite dans le moule de moussage une masse de mousse contenant un pourcentage prédéterminé de matière intumescente,
dans lequel, après le moussage, la matière de revêtement forme une peau imperméable à l'eau (24) sur le corps moulé amené à l'état de mousse (10).

9. Procédé pour monter un passage de conduite selon l'une des revendications 1 à 6 dans un élément de construction, en particulier un mur ou un plafond en béton, dans lequel lors de la coulée de l'élément de construction (18), le corps moulé (10) du passage de conduite est coulé de sorte que les saillies (20) forment des contre-dépouilles dans l'élément de construction (18).

10. Procédé selon la revendication 9, comportant les étapes consistant à :
- fixer une plaque de montage (26) sur une partie de coffrage (30), la plaque de montage (26) comportant des saillies (28) qui sont adaptées aux ouvertures de passage (12) du passage de conduite (11),
- placer le corps moulé (10) du passage de conduite (11) sur les saillies (28) de la plaque de montage (26) et fixer le corps moulé (10),
- retirer le corps moulé (10) dans l'élément de construction (18), et
- séparer la partie d'ossature (30) et la plaque de montage (26).
